# EUROPÄISCHE PATENTSCHRIFT

(11) **EP 4 080 757 B1**
(45) Veröffentlichungstag und Bekanntmachung des Hinweises auf die Patenterteilung: **30.10.2024**
(21) Anmeldenummer: 21020227.1
(22) Anmeldetag: 22.04.2021
(51) Int. Cl.: H02S 40/34

(54) **ANSCHLUSSDOSE FÜR DAS ANSCHLIESSEN VON ELEKTRISCHEN LEITERN AN EIN PHOTOVOLTAIKMODUL**
CONNECTION BOX FOR CONNECTING ELECTRICAL CONDUCTORS TO A PHOTOVOLTAIC MODULE
BOÎTIER DE CONNEXION POUR LA CONNEXION DES CONDUCTEURS ÉLECTRIQUES À UN MODULE PHOTOVOLTAÏQUE

(43) Veröffentlichungstag der Anmeldung: 26.10.2022
(73) Patentinhaber: Habemax GmbH, 1100 Wien (AT)
(72) Erfinder: AICHINGER, Martin, 4360 Grein (AT)
(74) Vertreter: SONN Patentanwälte GmbH & Co KG

(56) Entgegenhaltungen:
- DE-A1- 102008 023 108
- US-A1- 2011 114 149
- US-A1- 2019 372 517

## Beschreibung

Die Erfindung betrifft eine Anschlussdose für das Anschließen von elektrischen Leitern an ein Photovoltaikmodul.

Solarzellen eines Photovoltaikmoduls werden über Anschlussdosen z.B. an einen Verbraucher angeschlossen und/oder mit anderen Solarzellen oder weiteren Photovoltaikmodulen verbunden. Die Anschlussdose ist mit von den Solarzellen des Photovoltaikmoduls abgehenden Querverbindern verbunden, über die der Anschluss des Photovoltaikmoduls an elektrische Verbraucher oder an weitere Photovoltaikmodule erfolgt. Zwischen zwei derartigen Querverbindern ist üblicherweise eine Bypass-Diode geschaltet, die dazu dient, einen Ausfall des kompletten Photovoltaikmoduls oder sämtlicher miteinander verbundener Photovoltaikmodule bei einer teilweisen Abschattung des Photovoltaikmoduls bzw. der Photovoltaikmodule oder im Falle eines Schadens zu vermeiden.

Die Verbindung der Querverbinder mit der Anschlussdose erfolgt beispielsweise derart, dass die von den Solarzellen des Photovoltaikmoduls abgehenden Querverbinder in die Anschlussdose hineinragen und dort mit geeigneten Kontaktierungsblechen verbunden sind. Alternativ ist es möglich, die Anschlussdose mit vorstehenden Elektroden auszustatten, welche in das Photovoltaikmodul einlaminiert werden und im Randbereich des Photovoltaikmoduls die Querverbinder kontaktieren.

Die DE 102008023108 A1 beschreibt einen Kantenverbinder für ein Solarmodul umfassend wenigstens eine Diode, die in dem Kantenverbinder angeordnet ist und mindestens einen elektrischen Anschlussbereich aufweist zur elektrischen Verbindung der Diode.

Eine andere Ausführung einer Anschlussdose ist in der US 2019/0372517 A1 offenbart.

Die Anschlussdose ist häufig mit einem Vergussmaterial (Potting-Material) befüllt, um insbesondere die Bypass-Diode und/oder elektrische Kontakte z.B. vor Korrosion zu schützen, Wärme von der Bypass-Diode abzuführen und/oder einen Feuchtigkeitseintrag zu verhindern.

An Anschlussdosen für Photovoltaikmodule werden zahlreiche Anforderungen gestellt, um die technische Sicherheit zu gewährleisten. Insbesondere werden eine hohe Brandbeständigkeit, eine gute Kriechstromfestigkeit, eine hohe thermische Alterungsbeständigkeit und eine gute dielektrische Durchschlagsfestigkeit gefordert. Weiters müssen die an die Anschlussdose angeschlossenen elektrischen Leiter einer vorgegebenen Zugbelastung standhalten können, ohne dass sich die elektrische Kontaktierung löst.

Der vorliegenden Erfindung liegt daher die Aufgabe zugrunde, eine Anschlussdose bereitzustellen, welche bei kleinstmöglicher Baugröße alle notwendigen Anforderungen, die an eine Anschlussdose für gebäudeintegrierte Photovoltaikmodule betriebs- und sicherheitstechnisch sowie normativ gestellt werden, erfüllt. Im speziellen, aber nicht ausschließlich handelt es sich hierbei um Temperaturbeständigkeit, die thermische Alterungsbeständigkeit der verwendeten Kunststoffe, die thermische Stabilität der Bypass-Diode, Die UV- und Brandbeständigkeit, die mechanische Festigkeit, die Kabelzugentlastung und die Dichtigkeit. Diese Anforderungen haben sich in den letzten Jahren auf Grund der Fehleranfälligkeit von Anschlussdosen verschärft und wurden in den zuständigen Normen neu geregelt.

Weiters soll die Anschlussdose für das Einlaminieren der Kontaktierungselektroden in das Photovoltaikmodul geeignet sein und eine besonders platzsparende Anordnung am Rand des Photovoltaikmoduls erlauben.

Zur Lösung dieser Aufgabe sieht die Erfindung gemäß einem ersten Aspekt eine Anschlussdose für das Anschließen von elektrischen Leitern an ein Photovoltaikmodul vor, umfassend ein Anschlussgehäuse, das eine Anschlusskammer umgibt, wobei das Anschlussgehäuse an zwei in Längsrichtung gegenüberliegenden Enden Gehäuseöffnungen für den Durchtritt der elektrischen Leiter aufweist, und umfassend zwei als Metallplättchen ausgebildete Elektroden zur elektrischen Verbindung mit Querverbindern des Photovoltaikmoduls, wobei die Elektroden das Anschlussgehäuse quer zur Längsrichtung durchsetzen, sodass Anschlussenden der Elektroden in die Anschlusskammer hineinragen und den Anschlussenden gegenüberliegende, freie Enden der Elektroden aus dem Anschlussgehäuse hervorragen, wobei die Anschlussenden der Elektroden im Inneren der Anschlusskammer abgewinkelt ausgebildet sind und im abgewinkelten Bereich einen in der Flucht zwischen den Gehäuseöffnungen liegenden Kontaktierungsbereich für die elektrische Kontaktierung der elektrischen Leiter ausbilden.

Eine besonders kompakte Bauweise wird hierbei dadurch gewährleistet, dass das Anschlussgehäuse eine längliche Form mit einer Längsrichtung aufweist, die durch die Verbindung der beiden Gehäuseöffnungen definiert ist und entlang der sich die jeweils durch eine Gehäuseöffnung in die Gehäusekammer eingeführten elektrischen Leiter erstrecken. Zur elektrischen Verbindung der in die Gehäusekammer eingeführten elektrischen Leiter an den jeweiligen Querverbinder des Photovoltaikmoduls ist jeweils eine Elektrode vorgesehen, die quer zur Längsrichtung, insbesondere im rechten Winkel zur Längsrichtung, in die Gehäusekammer hineinragt und in der Gehäusekammer einen Kontaktierungsbereich für die elektrische Kontaktierung des zugehörigen elektrischen Leiters ausbildet. Damit der jeweilige elektrische Leiter für die Kontaktierung innerhalb des Gehäuses nicht umgelenkt werden muss, sondern in seiner geraden, sich in Längsrichtung erstreckenden Orientierung verbleiben kann, liegt der jeweilige Kontaktierungsbereich der Elektrode in der Flucht zwischen den Gehäuseöffnungen.

Um eine zugfeste Verbindung zwischen dem elektrischen Leiter und dem Kontaktierungsbereich der zugehörigen Elektrode zu erreichen, ist bevorzugt eine Crimpverbindung zwischen den Elektroden und dem jeweiligen elektrischen Leiter vorgesehen. Das Crimpen wird hierbei dadurch ermöglicht, dass die Anschlussenden der Elektroden im Inneren der Anschlusskammer abgewinkelt ausgebildet sind. Die Abwinkelung bildet vorzugsweise im Wesentlichen eine L-Form des Anschlussendes aus, das durch den Crimpvorgang unter Einklemmung des elektrischen Leiters zu einer U-Form verformt wird.

Eine bevorzugte Ausführungsform sieht hierbei vor, dass die Abwinkelung der Anschlussenden entlang einer Knicklinie erfolgt, die sich in Längsrichtung des Anschlussgehäuses erstreckt.

Vorzugsweise sind durch die Abwinkelung ein erster und ein zweiter Schenkel des jeweiligen Anschlussendes geschaffen, wobei der erste Schenkel an einer Bodenwand des Anschlussgehäuses anliegt und der zweite Schenkel sich von der Bodenwand weg in die Flucht zwischen den Gehäuseöffnungen hinein erstreckt.

Um die Luftstrecke zwischen dem Kontaktierungsbereich der Elektrode und der Gehäusewand zu maximieren, ist bevorzugt vorgesehen, dass der zweite Schenkel in Abstand von einer an die Bodenwand angrenzenden Seitenwand verläuft. Dadurch wird die dielektrische Durchschlagsfestigkeit der Anschlussdose erhöht.

Die Kriechstromfestigkeit der Anschlussdose wird erfindungsgemäß dadurch verbessert, dass das Anschlussgehäuse einen Basisteil und einen Deckelteil umfasst, wobei der Deckelteil im auf den Basisteil aufsetzten Zustand Seitenwände des Basisteils zumindest teilweise, bevorzugt vollständig überdeckt. Durch die genannte Überdeckung wird die Kriechstrecke im Ausmaß der Überdeckung erhöht.

Besonders bevorzugt sind der Basisteil und der Deckelteil im Querschnitt jeweils U-förmig mit einer Boden- bzw. Deckelwand und mit zwei die Schenkel der U-Form bildenden Seitenwänden ausgebildet, wobei die Seitenwände des Deckelteils im auf den Basisteil aufgesetzten Zustand die Seitenwände des Basisteils überlappen.

Der Deckelteil erlaubt im geöffneten Zustand weiters einen einfachen Zugang in das Innere der Anschlusskammer.

Um die Elektroden im aus dem Anschlussgehäuse vorragenden Abschnitt zu isolieren und zu verstärken, weist das Anschlussgehäuse bevorzugt wenigstens eine flache Gehäusezungen auf, aus welcher die freien Enden der Elektroden hervorragen.

Zur Verbesserung der Auszugsfestigkeit der elektrischen Leiter aus dem Anschlussgehäuse, ist bevorzugt vorgesehen, dass am Rand der Gehäuseöffnungen als Auszugssicherung wirkende Vorsprünge angeordnet sind.

Gemäß einer bevorzugten Ausführungsform besteht das Anschlussgehäuse aus einem faserverstärkten Polyamid. Dieses Material zeichnet sich nicht nur durch eine hohe mechanische Festigkeit aus, sondern auch durch einen guten elektrischen Isolationskennwert und durch gute thermische Alterungsbeständigkeit.

Gemäß einem zweiten Aspekt betrifft die Erfindung ein Photovoltaikmodul, welches mit der erfindungsgemäßen Anschlussdose ausgestattet ist.

Das Photovoltaikmodul umfasst eine Mehrzahl von Solarzellen, die nebeneinanderliegend zwischen einer gemeinsamen vorderen Abdeckschicht und einer gemeinsamen rückseitigen Abdeckschicht angeordnet und mittels Querverbindern elektrisch miteinander verbunden sind, wobei die Querverbinder zu einem Randbereich des Photovoltaikmoduls geführt sind, und umfasst weiters eine Anschlussdose gemäß dem ersten Aspekt der Erfindung, deren Elektroden im Randbereich des Photovoltaikmoduls zwischen der vorderen Abdeckschicht und der rückseitigen Abdeckschicht einlaminiert sind und die Querverbinder elektrisch kontaktieren.

Die vordere Abdeckschicht besteht, wie an sich bekannt, bevorzugt aus einer Glastafel.

Bevorzugt ist vorgesehen, dass ein elektrischer Leiter durch die Gehäuseöffnung des Anschlussgehäuses der Anschlussdose und in Längsrichtung des Anschlussgehäuses bis zum Kontaktierungsbereich der Elektrode geführt ist und den Kontaktierungsbereich kontaktiert.

Der elektrische Leiter kann grundsätzlich auf verschiedene Weise mit der zugehörigen Elektrode elektrisch und mechanisch verbunden werden. Bevorzugt ist hierbei vorgesehen, dass der elektrische Leiter an den Kontaktierungsbereich gelötet oder geschweißt ist. Der elektrische Leiter kann auch durch Crimpen des Kontaktierungsbereichs mit diesem mechanisch verbunden sein. Besonders bevorzugt, insbesondere im Hinblick auf die Auszugssicherheit, ist eine Ausführung, bei welcher der elektrische Leiter sowohl durch Löten oder Schweißen als auch durch Crimpen mit dem Kontaktierungsbereich der gehörigen Elektrode verbunden ist.

Wie an sich bekannt, kann die Gehäusekammer mit einem Potting-Material gefüllt sein, wodurch im Rahmen der Verbesserung der elektrischen Durchschlagsfestigkeit die Luftstrecke eliminiert wird.

Weiters ist bevorzugt eine Bypass-Diode zwischen den Kontaktierungsbereichen der Elektroden geschalten. Die Bypass-Diode ist hierbei bevorzugt durch Löten mit den Kontaktierungsbereichen der Elektroden verbunden. Die in der Diode während des Betriebs des Photovoltaikmoduls entstehende Wärme kann hierbei sowohl über die elektrischen Leiter abgeleitet als auch über die Elektroden in das Photovoltaikmodul geleitet werden.

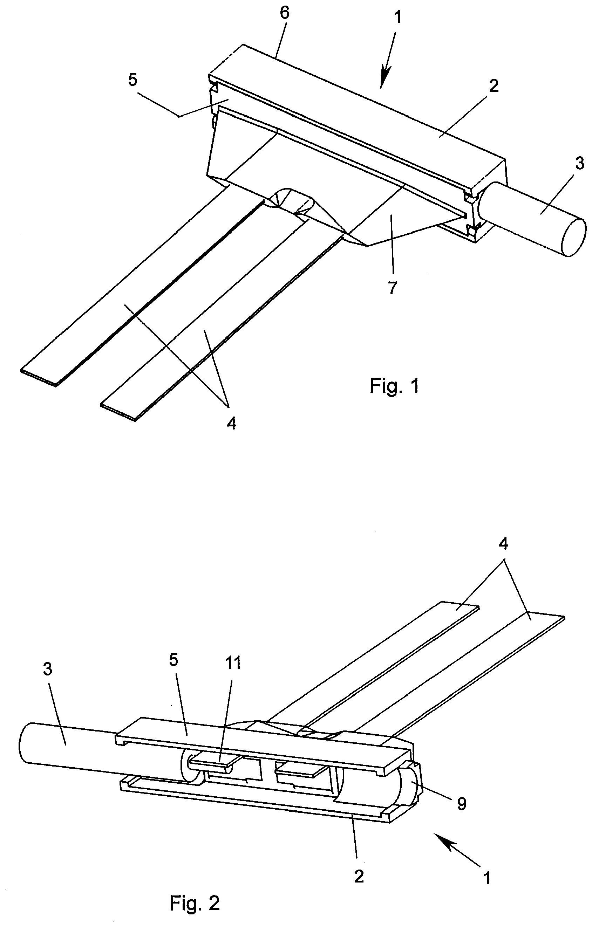

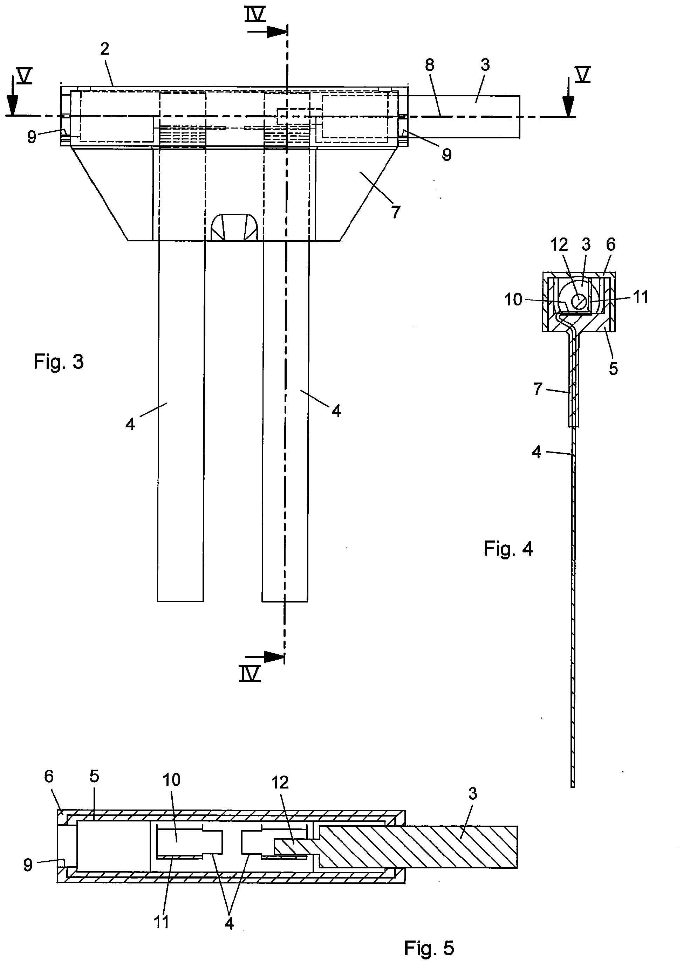

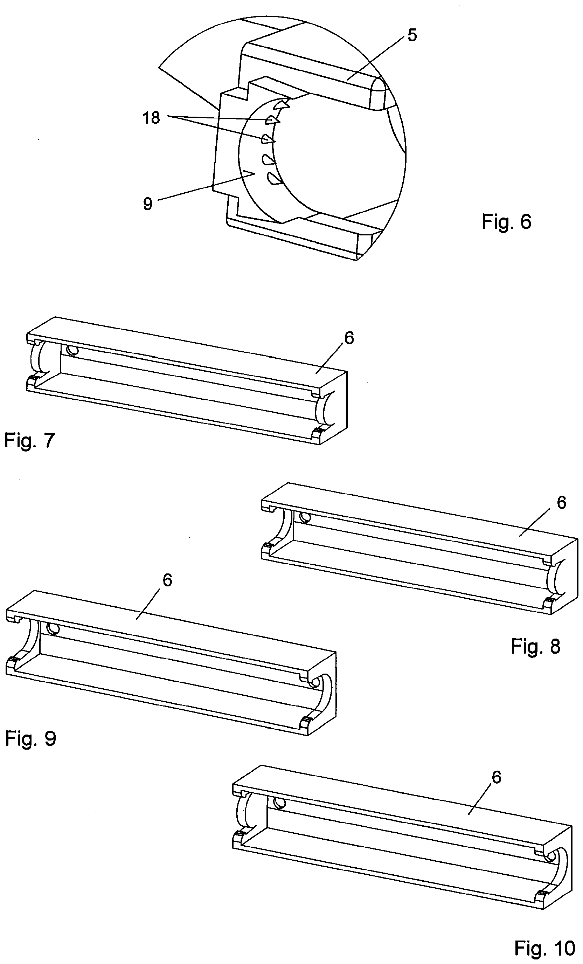

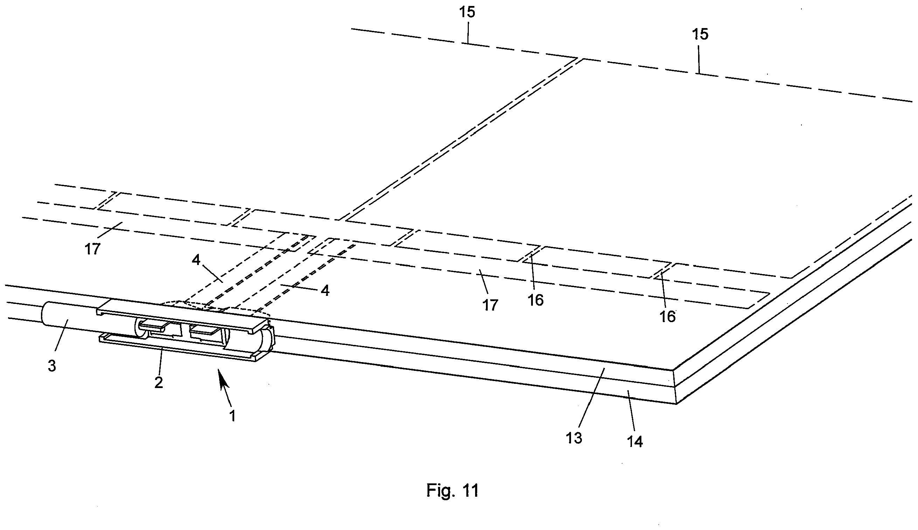

Die Erfindung wird nachfolgend anhand eines in der Zeichnung schematisch dargestellten Ausführungsbeispiels näher erläutert. In dieser zeigen Fig. 1 eine perspektivische Ansicht der erfindungsgemäßen Anschlussdose in geschlossenem Zustand, Fig. 2 eine perspektivische Ansicht der erfindungsgemäßen Anschlussdose in offenem Zustand, Fig. 3 eine Schnittansicht der Anschlussdose, Fig. 4 einen Schnitt gemäß der Linie IV-IV der Fig. 3, Fig. 5 einen Schnitt gemäß der Linie V-V der Fig. 3, Fig. 6 eine Detailansicht einer Gehäuseöffnung, Fig. 7.10 verschiedene Varianten des Gehäusedeckels und Fig. 11 ein Photovoltaikmodul mit integrierter Anschlussdose.

In Fig. 1 ist die Anschlussdose mit 1 bezeichnet und umfasst ein Anschlussgehäuse 2, das eine Anschlusskammer umgibt. Das Anschlussgehäuse 1 weist an zwei in Längsrichtung gegenüberliegenden Enden Gehäuseöffnungen auf, über welche ein jeweiliger elektrischer Leiter 3 in die Gehäusekammer geführt ist, wo der elektrische Leiter an eine jeweilige Elektrode 4 angeschlossen ist, mittels welcher eine elektrische Verbindung mit einem Querverbinder eines Photovoltaikmoduls (nicht gezeigt) erfolgt.

Der Anschluss des elektrischen Leiters 3 an einen Kontaktierungsbereich der Elektrode 4 ist in der geöffneten Darstellung des Anschlussgehäuses 2 gemäß Fig. 2 gezeigt. Das Anschlussgehäuse 2 besteht aus einem Basisteil 5 und einem Deckelteil 6, wobei der Deckelteil 6 in Fig. 2 zur Illustration der Gehäusekammer nicht dargestellt ist. Weiters ist ersichtlich, dass das Anschlussgehäuse 2 eine Gehäusezunge 7 aufweist, welche die Elektroden 4 in einem Teilbereich umgibt bzw. stützt. Die Elektroden 4 sind zumindest in ihren aus dem Anschlussgehäuse 2 herausragenden Endbereichen als Metallplättchen ausgebildet, um bei der Herstellung des Photovoltaikmoduls zwischen einer vorderen Abdeckschicht und einer rückseitigen Abdeckschicht einlaminiert werden zu können.

In der Schnittdarstellung gemäß Fig. 3 ist ersichtlich, dass die als Metallplättchen ausgebildeten Elektroden 4 das Anschlussgehäuse 2 quer zur Längsrichtung durchsetzen, die durch die Längsachse 8 gekennzeichnet ist. Die Anschlussenden der Elektroden 4 ragen somit in die Anschlusskammer hinein und bilden dort einen Kontaktierungsbereich zur Kontaktierung mit dem elektrischen Leiter 3 aus, wobei der Kontaktierungsbereich in der Flucht zwischen den gegenüberliegenden Gehäuseöffnungen 9 liegt.

Wie in Fig. 4 und 5 dargestellt, weisen die Anschlussenden der Elektroden 4 hierbei wenigstens eine Abwinkelung auf, durch die ein erster Schenkel 10 und ein zweiter Schenkel 11 geschaffen sind, wobei der erste Schenkel 10 an einer Bodenwand des Anschlussgehäuses 2 anliegt und der zweite Schenkel 11 sich von der Bodenwand weg in die Flucht zwischen den Gehäuseöffnungen 9 hinein erstreckt. Das blanke Anschlussende 12 des elektrischen Leiters 3 kann auf diese Art in seiner in Längsrichtung verlaufenden Position direkt mit dem Anschlussende der Elektrode 4 verbunden werden, beispielsweise durch Löten. Weiters kann das Anschlussende 12 des elektrischen Leiters 3 auch durch Crimpen an der Elektrode befestigt werden, wofür der zweite Schenkel 12 durch ein geeignetes Werkzeug zum ersten Schenkel 11 hin umgebogen wird.

In der Detailansicht gemäß Fig. 6 ist ersichtlich, dass am Rand der Gehäuseöffnungen 9 als Auszugssicherung wirkende Vorsprünge 18 angeordnet sein können. Die Vorsprünge erstrecken sich radial nach innen und sind z.B. spitz zulaufend, insbesondere kegelförmig, ausgebildet. Insbesondere sind die Vorsprünge am Basisteil 5 ausgebildet.

Fig. 7 bis 10 zeigen verschiedene Varianten des Deckelteils 6. Die Variation des Deckelteils 6 bezieht sich auf die Ausbildung der Stirnseiten, welche den Gehäuseöffnungen 9 zugeordnet sind. Dabei können die Stirnseiten ausgebildet sein, um die Gehäuseöffnungen 9 wahlwiese frei zu lassen oder abzudecken. Je nach Anwendungsfall kann hierbei ein Deckelteil 6 auf das Basisteil 5 aufgesetzt werden, das keine, eine oder beide Gehäuseöffnung(en) 9 abdeckt. Fig. 7 zeigt eine Variante, bei der beide Gehäuseöffnungen 9 abgedeckt werden. Fig. 8 zeigt eine Variante, bei der eine der beiden Gehäuseöffnungen 9 abgedeckt wird. Fig. 10 zeigt eine Variante, bei der die andere der beiden Gehäuseöffnungen 9 abgedeckt wird. Fig. 9 zeigt eine Variante, bei der keine der Gehäuseöffnungen 9 abgedeckt wird. Je nach Deckelteil 6 wird die erfindungsgemäße Anschlussdose verwendet, um an beide Elektroden, an eine Elektrode oder an keine der Elektroden einen elektrischen Leiter anzuschließen.

In Fig. 11 ist anhand der Darstellung eines Photovoltaikmoduls dargestellt, wie die oben beschriebene Anschlussdose 1 in das Modul integriert wird, indem die Elektroden 4 samt der Gehäusezunge 7 der Anschlussdose 1 während eines herkömmlichen Herstellungsprozesses in das Photovoltaikmodul einlaminiert werden. Die Gehäusezunge 7 dient hierbei der Isolierung der Elektroden 4 im Randbereich des Photovoltaikmoduls. Das Photovoltaikmoduls umfasst eine vordere Abdeckschicht 14 und eine rückwärtige Abdeckschicht 13, zwischen denen die Solarzellen 15 angeordnet sind.

Bei der Herstellung eines Photovoltaikmoduls wird zunächst ein vordere Abdeckschicht 14, insbesondere eine Glasscheibe, bereitgestellt. Auf diese wird eine zugeschnittene Bahn einer EVA-Folie gelegt. Die Solarzellen 15 werden mittels Lötbändchen zu einzelnen Strängen (Strings) verbunden und auf der Glasscheibe 14 mit der EVA-Folie positioniert. Danach werden die Querverbinder 17, die die einzelnen Strings 16 miteinander verbinden, positioniert und verlötet. Anschließend wird die Anschlussdose 7 im Randbereich des Photovoltaikmoduls so positioniert, dass die Elektroden 4 auf der EVA-Folie liegend die Querverbinder kontaktieren. Abschließend wird der gesamte Aufbau mit einer zugeschnittenen EVA-Folie und einer weiteren Schicht, z.B. einer Polyvinylfluoridfolie, als rückseitige Abdeckschicht 13 bedeckt. Als nächster Produktionsschritt erfolgt das Laminieren des Moduls bei z.B. 140°C. Beim Laminieren bildet sich aus der bis dahin milchigen EVA-Folie eine klare, dreidimensional vernetzte und nicht mehr aufschmelzbare Kunststoffschicht, in der die Solarzellen 15 und die Elektroden 4 der Anschlussdose 1 eingebettet sind und die fest mit der Glasscheibe 14 und der rückseitigen Abdeckschicht 13 verbunden ist.

## Patentansprüche

1. Anschlussdose für das Anschließen von elektrischen Leitern (3) an ein Photovoltaikmodul, umfassend ein Anschlussgehäuse (2), das eine Anschlusskammer umgibt, wobei das Anschlussgehäuse (2) an zwei in Längsrichtung gegenüberliegenden Enden Gehäuseöffnungen (9) für den Durchtritt der elektrischen Leiter (3) aufweist, und umfassend zwei als Metallplättchen ausgebildete Elektroden (4) zur elektrischen Verbindung mit Querverbindern des Photovoltaikmoduls, wobei die Elektroden (4) das Anschlussgehäuse (2) quer zur Längsrichtung durchsetzen, sodass Anschlussenden der Elektroden (4) in die Anschlusskammer hineinragen und den Anschlussenden gegenüberliegende, freie Enden der Elektroden (4) aus dem Anschlussgehäuse (2) hervorragen und wobei die Anschlussenden der Elektroden (4) im Inneren der Anschlusskammer abgewinkelt ausgebildet sind und im abgewinkelten Bereich einen in der Flucht zwischen den Gehäuseöffnungen (9) liegenden Kontaktierungsbereich für die elektrische Kontaktierung der elektrischen Leiter (3) ausbilden, **dadurch gekennzeichnet, dass** das Anschlussgehäuse (2) einen Basisteil (5) und einen Deckelteil (6) umfasst, wobei der Deckelteil (6) im auf den Basisteil (5) aufsetzten Zustand Seitenwände des Basisteils (5) zumindest teilweise, bevorzugt vollständig überdeckt, und dass der Basisteil (5) und der Deckelteil (6) im senkrecht zur Längsrichtung verlaufenden Querschnitt jeweils U-förmig mit einer Boden- bzw. Deckelwand und mit zwei die Schenkel der U-Form bildenden Seitenwänden ausgebildet sind, wobei die Seitenwände des Deckelteils (6) im auf den Basisteil (5) aufgesetzten Zustand die Seitenwände des Basisteils (5) überlappen.

2. Anschlussdose nach Anspruch 1, **dadurch gekennzeichnet, dass** die Abwinkelung der Anschlussenden entlang einer Knicklinie erfolgt, die sich in Längsrichtung des Anschlussgehäuses (2) erstreckt.

3. Anschlussdose nach Anspruch 1 oder 2, **dadurch gekennzeichnet, dass** durch die Abwinkelung ein erster (10) und ein zweiter Schenkel (11) des jeweiligen Anschlussendes geschaffen sind, wobei der erste Schenkel (10) an einer Bodenwand des Anschlussgehäuses (2) anliegt und der zweite Schenkel (11) sich von der Bodenwand weg in die Flucht zwischen den Gehäuseöffnungen (9) hinein erstreckt.

4. Anschlussdose nach Anspruch 3, **dadurch gekennzeichnet, dass** der zweite Schenkel (11) in Abstand von einer an die Bodenwand angrenzenden Seitenwand verläuft.

5. Anschlussdose nach einem der Ansprüche 1 bis 4, **dadurch gekennzeichnet, dass** das Anschlussgehäuse (2) wenigstens eine flache Gehäusezungen (7) aufweist, aus welcher die freien Enden der Elektroden (4) hervorragen.

6. Photovoltaikmodul umfassend eine Mehrzahl von Solarzellen, die nebeneinanderliegend zwischen einer gemeinsamen vorderen Abdeckschicht und einer gemeinsamen rückseitigen Abdeckschicht angeordnet und mittels Querverbindern elektrisch miteinander verbunden sind, wobei die Querverbinder zu einem Randbereich des Photovoltaikmoduls geführt sind, und weiters umfassend eine Anschlussdose (1) nach einem der Ansprüche 1 bis 5, deren Elektroden (4) im Randbereich des Photovoltaikmoduls zwischen der vorderen Abdeckschicht und der rückseitigen Abdeckschicht einlaminiert sind und die Querverbinder elektrisch kontaktieren.

7. Photovoltaikmodul nach Anspruch 6, **dadurch gekennzeichnet, dass** ein elektrischer Leiter (3) durch die Gehäuseöffnung (9) des Anschlussgehäuses (2) der Anschlussdose (1) und in Längsrichtung des Anschlussgehäuses (2) bis zum Kontaktierungsbereich der Elektrode (4) geführt ist und den Kontaktierungsbereich kontaktiert.

8. Photovoltaikmodul nach Anspruch 6 oder 7, **dadurch gekennzeichnet, dass** der elektrische Leiter (3) an den Kontaktierungsbereich gelötet ist.

9. Photovoltaikmodul nach Anspruch 6, 7 oder 8, **dadurch gekennzeichnet, dass** der elektrische Leiter (3) durch Crimpen des Kontaktierungsbereichs mit diesem mechanisch verbunden ist.

10. Photovoltaikmodul nach einem der Ansprüche 6 bis 9, **dadurch gekennzeichnet, dass** die Gehäusekammer mit einem Potting-Material gefüllt ist.

11. Photovoltaikmodul nach einem der Ansprüche 6 bis 10, **dadurch gekennzeichnet, dass** eine Freilaufdiode zwischen den Kontaktierungsbereichen der Elektroden geschalten ist.

## Claims

1. Connection box for connecting electrical conductors (3) to a photovoltaic module, comprising a connection housing (2) which surrounds a connection chamber, the connection housing (2) having housing openings (9) for the passage of the electrical conductors (3) at two longitudinally opposite ends, and comprising two electrodes (4) designed as metal plates for electrically connecting to cross connectors of the photovoltaic module, the electrodes (4) passing through the connection housing (2) transversely to the longitudinal direction, so that connection ends of the electrodes (4) protrude into the connection chamber and free ends of the electrodes (4) opposite the connection ends protrude from the connection housing (2), and the connection ends of the electrodes (4) being angled in the interior of the connection chamber and, in the angled region, forming a contact region which is in the alignment between the housing openings (9) for electrically contacting the electrical conductors (3), **characterised in that** the connection housing (2) comprises a base part (5) and a cover part (6), the cover part (6) at least partially, preferably completely, covering side walls of the base part (5) when placed on the base part (5), **and in that** the base part (5) and the cover part (6) are each U-shaped in a cross-section running perpendicular to the longitudinal direction, having a base or cover wall and having two side walls forming the legs of the U-shape, the side walls of the cover part (6) overlapping the side walls of the base part (5) when placed on the base part (5).

2. Connection box according to claim 1, **characterised in that** the angling of the connection ends takes place along a bend line which extends in the longitudinal direction of the connection housing (2).

3. Connection box according to either claim 1 or claim 2, **characterised in that,** by the angling, a first (10) and a second leg (11) of the corresponding connection end are created, the first leg (10) resting against a bottom wall of the connection housing (2) and the second leg (11) extending away from the bottom wall into the alignment between the housing openings (9).

4. Connection box according to claim 3, **characterised in that** the second leg (11) runs at a distance from a side wall adjacent to the bottom wall.

5. Connection box according to any of claims 1 to 4, **characterised in that** the connection housing (2) has at least one flat housing tongue (7) from which the free ends of the electrodes (4) protrude.

6. Photovoltaic module comprising a plurality of solar cells which are arranged next to one another between a common front cover layer and a common rear cover layer and are electrically interconnected by means of cross connectors, wherein the cross connectors are guided to an edge region of the photovoltaic module, and further comprising a connection box (1) according to any of claims 1 to 5, the electrodes (4) of which are laminated in the edge region of the photovoltaic module between the front cover layer and the rear cover layer and electrically contact the cross connectors.

7. Photovoltaic module according to claim 6, **characterised in that** an electrical conductor (3) is guided through the housing opening (9) of the connection housing (2) of the connection box (1) and in the longitudinal direction of the connection housing (2) up to the contact region of the electrode (4) and contacts the contact region.

8. Photovoltaic module according to either claim 6 or claim 7,
**characterized in that** the electrical conductor (3) is soldered to the contact region.

9. Photovoltaic module according to claim 6, 7 or 8, **characterised in that** the electrical conductor (3) is mechanically connected to the contact region by crimping said region.

10. Photovoltaic module according to any of claims 6 to 9, **characterised in that** the housing chamber is filled with a potting material.

11. Photovoltaic module according to any of claims 6 to 10,
**characterized in that** a freewheeling diode is connected between the contact regions of the electrodes.

## Revendications

1. Boîte de raccordement pour le raccordement de conducteurs électriques (3) à un module photovoltaïque, comprenant un logement de raccordement (2) qui entoure une chambre de raccordement, dans laquelle le logement de raccordement (2) présente des ouvertures de logement (9) en deux extrémités opposées dans la direction longitudinale pour le passage des conducteurs électriques (3), et comprenant deux électrodes (4) conçues en tant que plaquettes métalliques pour la liaison électrique avec des connecteurs transversaux du module photovoltaïque, dans laquelle les électrodes (4) traversent le logement de raccordement (2) transversalement à la direction longitudinale, de sorte que des extrémités de raccordement des électrodes (4) fassent saillie jusque dans les chambres de raccordement et que des extrémités libres, opposées aux extrémités de raccordement, des électrodes (4) fassent saillie vers l'avant depuis le logement de raccordement (2) et dans laquelle les extrémités de raccordement des électrodes (4) sont conçues de façon coudée à l'intérieur des chambres de raccordement et forment, dans la zone coudée, une zone de contact se situant dans l'alignement entre les ouvertures de logement (9) pour la mise en contact électrique des conducteurs électriques (3), **caractérisée en ce que** le logement de raccordement (2) comprend une partie de base (5) et une partie de couvercle (6), dans laquelle la partie de couvercle (6), à l'état posé sur la partie de base (5), recouvre au moins partiellement, de préférence complètement, des parois latérales de la partie de base (5), et **en ce que** la partie de base (5) et la partie de couvercle (6), dans la section se déroulant perpendiculairement à la direction longitudinale, sont respectivement conçues en forme de U avec une paroi de fond ou de couvercle et avec deux parois latérales formant les branches de la forme en U, dans laquelle les parois latérales de la partie de couvercle (6) chevauchent les parois latérales de la partie de base (5) à l'état posé sur la partie de base (5).

2. Boîte de raccordement selon la revendication 1, **caractérisée en ce que** le coudage des extrémités de raccordement s'effectue le long d'une ligne de pliage qui s'étend dans la direction longitudinale du logement de raccordement (2).

3. Boîte de raccordement selon la revendication 1 ou 2, **caractérisée en ce qu'**une première (10) et une seconde branche (11) de l'extrémité de raccordement respective sont créées par le coudage, dans laquelle la première branche (10) s'applique contre une paroi de fond du logement de raccordement (2) et la seconde branche (11) s'étend en s'éloignant de la paroi de fond jusque dans l'alignement entre les ouvertures de logement (9).

4. Boîte de raccordement selon la revendication 3, **caractérisée en ce que** la seconde branche (11) se déroule à distance d'une paroi latérale avoisinant la paroi de fond.

5. Boîte de raccordement selon l'une des revendications 1 à 4, **caractérisée en ce que** le logement de raccordement (2) présente au moins une languette de logement (7) plate hors de laquelle les extrémités libres des électrodes (4) font saillie.

6. Module photovoltaïque comprenant une pluralité de cellules solaires qui sont agencées côte à côte entre une couche de recouvrement avant commune et une couche de recouvrement arrière commune et reliées électriquement ensemble au moyen de connecteurs transversaux, dans lequel les connecteurs transversaux sont guidés vers une zone de bord du module photovoltaïque, et comprenant en outre une boîte de raccordement (1) selon l'une des revendications 1 à 5, dont les électrodes (4) sont insérées par laminage dans la zone de bord du module photovoltaïque entre la couche de recouvrement avant et la couche de recouvrement arrière et sont en contact électrique avec les connecteurs transversaux.

7. Module photovoltaïque selon la revendication 6, **caractérisé en ce qu'**un conducteur électrique (3) est guidé à travers l'ouverture de logement (9) du logement de raccordement (2) de la boîte de raccordement (1) et dans la direction longitudinale du logement de raccordement (2) jusqu'à la zone de contact des électrodes (4), et entre en contact avec la zone de contact.

8. Module photovoltaïque selon la revendication 6 ou 7, **caractérisé en ce que** le conducteur électrique (3) est brasé contre la zone de contact.

9. Module photovoltaïque selon la revendication 6, 7 ou 8, **caractérisé en ce que** le conducteur électrique (3) est mécaniquement relié à la zone de contact par sertissage de celle-ci.

10. Module photovoltaïque selon l'une des revendications 6 à 9, **caractérisé en ce que** la chambre de logement est remplie d'un matériau d'enrobage.

11. Module photovoltaïque selon l'une des revendications 6 à 10, **caractérisé en ce qu'**une diode de roue libre est placée entre les zones de contact des électrodes.
